# EUROPÄISCHE PATENTSCHRIFT

(11) **EP 2 584 053 B1**
(45) Veröffentlichungstag und Bekanntmachung des Hinweises auf die Patenterteilung: **24.07.2019**
(21) Anmeldenummer: 12185628.0
(22) Anmeldetag: 24.09.2012
(51) Int. Cl.: C21D 1/30, C21D 9/08, F22B 37/02, B23P 15/26, C21D 1/34, C21D 9/50, C21D 11/00

(54) **Verfahren zur Erzeugung einer Spannungsverminderung in errichteten Rohrwänden eines Dampferzeugers**
Method for reducing tension in erected tube walls of a steam generator
Procédé de réduction des contraintes dans les parois tubulaires érigées d'un générateur de vapeur

(30) Priorität: 21.10.2011 DE 102011054718; 21.10.2011 US 201161549785 P
(43) Veröffentlichungstag der Anmeldung: 24.04.2013
(73) Patentinhaber: Mitsubishi Hitachi Power Systems Europe GmbH, 47059 Duisburg (DE); General Electric Technology GmbH, 5400 Baden (CH)
(72) Erfinder: Müller, Jürgen, 51429 Bergisch-Gladbach (DE); Thesing, Rudolf, 46359 Heiden (DE); Busekrus, Kurt, 45479 Mülheim (DE); Stegemann, Carsten, 46244 Bottrop (DE); Weissinger, Gerhard, 73257 Koengen (DE); Heim, Michael, 72160 Horb (DE); Berndt, Thoralf, 70378 Stuttgart (DE)
(74) Vertreter: Viering, Jentschura & Partner mbB Patent- und Rechtsanwälte

(56) Entgegenhaltungen:
- DE-B3-102008 037 085
- JP-A- H03 260 019
- JP-A- S60 248 819
- US-A- 5 015 828

## Beschreibung

Die Erfindung richtet sich auf ein Verfahren zur Wärmebehandlung errichteter und großflächig ausgebildeter Rohrwandbereiche oder Rohrwandsegmente der Rohrwände eines Dampferzeugers eines fossil befeuerten Kraftwerks in ihrem im Feuerungsraum des Dampferzeugers angeordneten und eingebauten, zu den Dampferzeugerrohrwänden verschweißten Zustand, in welchem sie den Feuerungsraum des Dampferzeugers des fossil befeuerten Kraftwerks umgeben.

In den letzten 25 Jahren ist eine weltweite Tendenz festzustellen, die Effizienz und Effektivität von fossil befeuerten, insbesondere mit pulverförmiger Kohle befeuerten, Kraftwerken zu steigern, um Emissionen zu vermindern und dadurch die Brennstoffressourcen zu schonen. Zur Erreichung dieses Ziels müssen dampfseitig die Dampfparameter Druck und Temperatur des Dampferzeugers erhöht werden. Die Erhöhung dieser Parameter Temperatur und Druck führt zu erhöhten Spannungen in den Rohren und in den Rohrwänden des Dampferzeugers. Die den Feuerraum des Dampferzeugers umgebenden Wände, die als Verdampfer oder auch als Überhitzer ausgebildet sind, werden häufig als Membranwände ausgebildet. Diese Wände sind zusätzlichen Materialspannungen dadurch ausgesetzt, dass hier bei der Errichtung der Membranwände im Feuerraum des Dampferzeugers noch Schweißarbeiten durchgeführt werden müssen, die nicht zuvor in der Werkstatt durchgeführt werden konnten. Durch die Größe der Dampferzeuger bedingt müssen hier noch Membranen oder Stege aneinander geschweißt werden oder Membranen oder Flossen/Stege mit Rohren verschweißt werden. Zudem werden entstehende Öffnungen, so genannte Fenster, mit Hilfe von Blechen verschweißt.

Bisher verwendete Materialien wie die Stahlsorte T12 (ASTM 213) können bei den gestiegenen Anforderungen nicht mehr verwendet werden, da diese aufgrund der technisch relativ geringen Spannungsbeanspruchungsmöglichkeit des Materials an sich sehr dicke Wände der einzelnen Rohre einer Rohrwand notwendig machen würden, was zu einem dramatischen Anstieg der innerhalb des Feuerraums notwendigen Temperatur führen würde. Zur Erhöhung der zulässigen Spannungsbeanspruchungen des Materials sind daher weitere Materialien wie T22, T23 oder T24 (ASTM 213) entwickelt worden. Teilweise sind diese Materialien ohne Wärmebehandlung nach einem während des Errichtens des Dampferzeugers notwendigen Schweißprozess einsetzbar. Auch sind Probleme nach einer Reinigungsbehandlung, wie beispielsweise dem innenseitigen Beizen der Rohre einer Membranwand, festgestellt worden. Je nach Anwendungsfall kann die Verarbeitung dieser Materialien dazu führen, dass Spannungsrisskorrosion auftritt.

Eine Wärmebehandlung des Spannungsarmglühens von rohrförmigen Stahlteilen als Baukomponenten von Karosserieteilen oder Fahrwerksbauteilen eines Kraftfahrzeugs ist aus der DE 10 2005 033 360 A1 bekannt.

Weiterhin ist es aus der WO 02/48411 A1 bekannt, bei der Wärmebehandlung von Stahlbauteilen Abkühlvorgänge durch das Aufsprühen oder Anblasen von Medien zu steuern.

Aus der US 5,015,828 A ist es bekannt, in einen den Primärkreislauf vom Sekundärkreislauf trennenden Rohrboden eines Dampferzeugers eines Atomkraftwerks eingelassene Wärmetauscherrohre mittels eingeschweißter Reparaturstücke an korrodierten Stellen innenseitig zu reparieren und diese reparierten Bereiche anschließend einer Spannungsarmglühbehandlung zu unterwerfen, wobei die dafür notwendige Temperatur mittels elektrischer Heizpatronen aufgebracht wird. Dabei ist es möglich, mehrere Rohre innenseitig mit Heizpatronen zu versehen und gleichzeitig wärmezubehandeln.

Aus der JP S60 248819 A ist es bekannt, mehrere Rohre von innen mittels Heißluft zu erwärmen, wobei in die Rohre Verteilungsrohre eingeschoben werden, die eine Vielzahl an Löchern aufweisen, aus welchen Heißluft in den Innenbereich eines ein jeweiliges Verteilungsrohr umgebenden Rohres einströmt.

Weiterhin ist es aus der DE 10 2008 037 085 B3 bekannt, Rohrwandbereiche oder Rohrwandsegmente der Rohrwände eines Dampferzeugers eines fossil befeuerten Kraftwerks durch entsprechende Auswahl an Werkstoffen und ein Vorschuhen mit speziell ausgewählten Werkstoffen derart werkstattseitig und baustellenseitig herzustellen, dass diese abschließend zu den den Feuerungsraum des Dampferzeugers umgebenden Rohrwänden verschweißt werden können, ohne dass in diesem eingebauten Zustand dann noch eine Wärmebehandlung notwendig ist. Vorher werden die werkstattseitig oder baustellenseitig bei verschiedenen Herstell- oder Montageschritten zu größeren Einheiten verschweißten Elemente im Bereich ihrer Schweißnähte einer Anlasswärmebehandlung im Temperaturbereich zwischen 740 °C und 780 °C ausgesetzt.

Die JP H03 260019 A offenbart eine Spannungsarmglühbehandlung eines flüssigkeitsgefüllten Druckkessels. In die im Kessel existente Flüssigkeit wird eine Flüssigkeit gleicher Art mit einer solchen Temperatur in einen für eine Wärmebehandlung vorgesehenen Bereich eingeleitet, dass dort die entsprechende Wärmebehandlung stattfinden kann. Diese Flüssigkeit wird über eine Flüssigkeitsleitung in den Druckkessel und die dortige Flüssigkeit eingeleitet. Gleichzeitig wird an anderer Stelle mit einer weiteren Leitung eine entsprechende Menge an Flüssigkeit abgesaugt, so dass mit Hilfe einer Zirkulationsvorrichtung eine Flüssigkeitszirkulation ausgebildet wird.

Der Erfindung liegt die Aufgabe zugrunde, eine Lösung zu schaffen, die die Verwendung von in Bezug auf die im Kraftwerksbetrieb bei erhöhten Dampfparametern problematischeren Stahlsorten, insbesondere der Stähle T23 und T24, bei der Errichtung von Dampferzeugern ermöglicht.

Diese Aufgabe wird durch ein Verfahren gemäß Anspruch 1 gelöst. Vorteilhafte Ausgestaltungen und zweckmäßige Weiterbildungen sind Gegenstand der Unteransprüche 2 bis 15.

Untersuchungen haben ergeben, dass eine der Voraussetzungen für eine Spannungsrisskorrosion, die bei errichteten Rohrwänden eines Dampferzeugers auftritt, hohe Spannungen sind, die durch Restspannungen verursacht werden, die beim Schweißen während der Herstellung und Errichtung der Rohrwände in Rohrwandbereichen oder Rohrwandsegmenten erzeugt werden. Es wird nun vorgeschlagen, diese im Material vorhandenen Restspannungen zusammen mit den grundsätzlich vorhandenen, konstruktiv auftretenden Materialspannungen derartig langer Komponenten, aus denen die Rohrwände zusammengesetzt sind, den durch die großen Gewichte der Komponenten bedingten Spannungen und den aufgrund der beim Schweißen auftretenden Korn(größen)veränderungen auftretenden Spannungen mittels einer Spannungsarmglühbehandlung der zur Wärmebehandlung vorgesehenen Rohrwandbereiche oder Rohrwandsegmente im Dampferzeuger in ihrem errichteten und eingebauten Zustand, d.h. der errichteten und in ihrer Einbauposition befindlichen Dampferzeugerrohrwände, zu reduzieren. Erfindungsgemäß ist also vorgesehen, dass die Rohrwandbereiche oder Rohrwandsegmente im Feuerraum, bzw. diesen umgebend, eines fossil befeuerten Kraftwerks auf übliche Art und Weise angeordnet oder errichtet, insbesondere zu den Rohrwände verschweißt und gegebenenfalls mit weiteren Bauteilen verschweißt werden, und dann anschließend diejenigen Rohrwandbereiche, die einer Wärmebehandlung unterzogen werden sollen, einer Spannungsarmglühbehandlung in ihrem eingebauten Zustand und in ihrer Einbauposition im Dampferzeuger unterworfen und spannungsarm geglüht werden. Hierbei werden die in dem Dampferzeuger, der eine quadratische Grundfläche von beispielsweise 30 x 30 m und eine Höhe von über 100 m aufweisen kann, entsprechend großflächig ausgebildeten Rohrwandbereiche oder Rohrwandsegmente großflächig einer jeweils große Bereiche der wärmezubehandelnden Rohrwandbereiche oder Rohrwandsegmente erfassenden oder beaufschlagenden und in diesem Sinne ebenfalls großflächig wirkenden und großflächig ausgeübten oder aufgetragenen Spannungsarmglühbehandlung unterworfen. Hierbei werden insbesondere auch, aber eben nicht ausschließlich, solche Rohrbereiche oder Rohrsegmente von der Spannungsarmglühbehandlung erfasst, die bei der Errichtung und Positionierung der Rohrwandsegmente und Rohrwandbereiche zu den den Dampferzeuger umgebenden Rohrwänden auf der Baustelle noch einer Schweißbehandlung unterworfen worden sind. Die Bereiche derartiger Schweißbehandlungen werden dann mit einer Spannungsarmglühung vor Ort behandelt, im Sinne der vorstehenden Ausführungen also zusammen mit dem anderen Wandbereichen gleichsam mitbehandelt. Insbesondere betrifft dies Membranrohrwände oder Membranrohrwandbereiche des Dampferzeugers, die dann dem erfindungsgemäßen Verfahren zur Spannungsarmglühung unterworfen werden.

Die Erfindung zeichnet sich also aus durch ein Verfahren zur Wärmebehandlung errichteter und großflächig ausgebildeter Rohrwandbereiche oder Rohrwandsegmente der Rohrwände eines Dampferzeugers eines fossil befeuerten Kraftwerks in ihrem im Feuerungsraum des Dampferzeugers angeordneten und eingebauten, zu den Dampferzeugerrohrwänden verschweißten Zustand, in welchem sie den Feuerungsraum des Dampferzeugers des fossil befeuerten Kraftwerks umgeben, wobei ganze wärmezubehandelnde Rohrwandbereiche oder Rohrwandsegmente in ihrem in den Dampferzeuger eingebauten und den Feuerungsraum umgebenden Zustand durch Erwärmen mittels eines heißen strömenden Wärmeübertragungsmediums großflächig einer großflächig wirkenden, jeweils große Bereiche der wärmezubehandelnden Rohrwandbereiche oder Rohrwandsegmente erfassenden oder beaufschlagenden Spannungsarmglühbehandlung unterworfen werden.

Zur Errichtung von einen Feuerungsraum umgebenden Rohrwänden eines Dampferzeugers, insbesondere eines Kraftwerks, werden Rohrwandbereiche oder Rohrwandsegmente hergestellt, durch Verschweißung miteinander verbunden und in ihre den Feuerungsraum umgebende Einbauposition im Dampferzeuger gebracht sowie wird an den errichteten und eingebauten Rohrwandbereichen oder Rohrwandsegmenten, insbesondere wenn diese eine Membranwand ausbilden, in ihrer Einbauposition im in den Dampferzeuger eingebauten Zustand großflächig eine Spannungsarmglühbehandlung durchgeführt.

In der vorliegenden Erfindung bedeutet "im eingebauten Zustand" also insbesondere, dass die jeweiligen Rohrwandsegmente in ihre endgültige Lage oder Einbauposition im Dampferzeuger oder innerhalb des Dampferzeugers eines Kraftwerkes gebracht werden oder gebracht worden sind und bereits den jeweils vorgesehenen Fügebehandlungen unterworfen worden sind, also insbesondere miteinander oder mit anderen Bauteilen verschweißt worden sind. In diesem Sinne erfolgt das Spannungsarmglühen also an den Rohrwänden oder Rohrsegmenten im Dampferzeuger und im errichteten und verschweißten Zustand. Die Beschreibung offenbart daher auch ein diesbezügliches Verfahren zur Errichtung von einen Feuerungsraum umgebenden Rohrwänden.

Zur Erzeugung der für das Spannungsarmglühen notwendigen oder gewünschten Materialtemperatur ist es zweckmäßig, wenn die (jeweils notwendige oder gewünschte) Materialtemperatur durch Beheizung oder Erwärmung des wärmezubehandelnden Rohrwandbereiches von außen und/oder von innen erzeugt wird. Gegebenenfalls erfolgt die Erwärmung des wärmezubehandelnden Rohrwandbereiches also von außen, wobei darüber hinaus es zudem grundsätzlich zweckmäßig ist, wenn diese Erwärmung auf eine "nicht elektrische" Art und Weise erfolgt. In diesem Zusammenhang zeichnet sich die Erfindung in Ausgestaltung daher weiterhin dadurch aus, dass die für die Spannungsarmglühbehandlung jeweils notwendige oder gewünschte Materialtemperatur durch Beheizung oder Erwärmung der wärmezubehandelnden Rohrwandbereiche mittels eines erwärmten Heizgases oder Heißgases, vorzugsweise heißem Rauchgas oder Heißluft, erzeugt wird.

Eine besondere Ausführungsform des Verfahrens zur Wärmebehandlung besteht darin, dass innerhalb des Feuerraums des Dampferzeugers durch Verbrennung eines insbesondere fossilen Brennstoffes, wie beispielsweise Kohle, Öl oder Gas, ein heißes Rauchgas erzeugt wird, das dann innerhalb des Dampferzeugers feuerraumseitig an den Rohrwänden aufsteigt und/oder in die Rohre der Rohrwände eingeleitet wird und durch Wärmeübertragung die wärmezubehandelnden Rohrwandbereiche (aber auch andere Rohrwandbereiche) von außen und/oder von innen auf die gewünschte Materialtemperatur erwärmt. Hierbei ist es natürlich auch möglich, ein ausreichend temperiertes Rauchgas oder Heißgas oder Heizgas oder Heißluft außerhalb des Feuerraums oder Feuerungsraums des Dampferzeugers zu erzeugen und dann in den Feuerraum und/oder innenseitig in die Rohre der wärmezubehandelnden Rohrwandbereiche einzuleiten. Die Erfindung zeichnet sich daher bei dem Verfahren zur Wärmebehandlung weiterhin dadurch aus, dass innerhalb des Feuerraumes des Dampferzeugers durch Verbrennung eines, insbesondere fossilen, Brennstoffs, ein heißes Rauchgas oder Heißluft erzeugt wird oder dass ein heißes Rauchgas oder Heißluft oder ein Heißgas in den Feuerraum des Dampferzeugers und/oder die Rohre der wärmezubehandelnden Rohrwandbereiche eingeleitet wird, und dass das jeweilige heiße Rauchgas oder die jeweilige Heißluft oder das jeweilige Heißgas den wärmezubehandelnden Rohrwandbereichen außenseitig und/oder innenseitig zugeführt wird.

Unter Spannungsarmglühbehandlung wird hier ein Spannungsarmglühen im Sinne der DIN EN 10052 verstanden. Die dabei im Rohrmaterial zu erreichende Temperatur sollte vorzugsweise im Bereich von 400-600°C liegen und vorzugsweise >500°C, insbesondere >550°C, sein. Haltezeiten sollten >12h, insbesondere >24h, aber in der Regel nicht länger als eine Woche dauern.

Die Erfindung zeichnet sich in Ausgestaltung daher weiterhin dadurch aus, dass während der Spannungsarmglühbehandlung eine Materialtemperatur der wärmezubehandelnden oder wärmebehandelten Rohrwandbereiche von 400 °C bis 740 °C, vorzugsweise 400 °C bis 600 °C, eingestellt wird oder von größer ≥500 °C, vorzugsweise von 500 °C bis 600 °C, eingestellt wird oder von ≥550 °C, vorzugsweise von 550 bis 700 °C, oder von ≤740 °C, oder vorzugsweise ≤600 °C, insbesondere von 740 °C bis 500 °C, besonders bevorzugt von 600 °C bis 550 °C, eingestellt wird, was die Erfindung in Ausgestaltung ebenfalls vorsieht.

Hierbei ist es dann besonders zweckmäßig, wenn während der Spannungsarmglühbehandlung die Materialtemperatur und/oder die Ausdehnung der wärmezubehandelnden oder wärmebehandelten Rohrwandbereiche kontrolliert und/oder geregelt wird/werden.

In Bezug auf die Haltezeiten zeichnet sich die Erfindung dadurch aus, dass bei der Spannungsarmglühbehandlung eine Haltezeit der notwendigen oder gewünschten Materialtemperatur von ≥ 12 h, insbesondere ≥ 24 h, eingehalten wird.

Hierbei wird aber die Glühbehandlung selbst bei Großdampferzeugern zweckmäßiger Weise auf einen Zeitraum von maximal einer Woche beschränkt. Die Erfindung sieht daher in weiterer Ausgestaltung des Verfahrens zur Wärmebehandlung vor, dass bei der Spannungsarmglühbehandlung eine Haltezeit der Materialtemperatur von weniger als einer Woche eingehalten wird. Dabei wird aber eine Haltezeit von üblicherweise ≥ 12 h, insbesondere > 24 h, vorgesehen, so dass eine Spannungsarmglühbehandlung in der Regel zwischen einem und maximal sieben Tagen dauert.

Um die Temperatur bei der Spannungsarmglühbehandlung in den Rohrwandbereichen oder Rohrwandsegmenten einstellen und regeln zu können, sieht die Erfindung vor, dass während der Spannungsarmglühbehandlung die Materialtemperatur und/oder die Ausdehnung der wärmezubehandelnden oder wärmebehandelten Rohrwandbereiche kontrolliert und/oder geregelt wird/werden. Hierbei kann es dann weiterhin so sein, dass die Spannungsarmglühbehandlung durch Messung der Ausdehnung und/oder der Materialtemperatur der jeweils wärmezubehandelnden Rohrwandbereiche oder Rohrwandsegmente sowie durch Einstellung und Einregelung der Feuerungsrate zur Erzeugung des Rauchgases oder der Heißluft oder des Heißgases, vorzugsweise im Feuerraum des Dampferzeugers, und/oder die Durchflussrate des Kühlmediums eingestellt und geregelt wird.

Um die Temperatur der einer Spannungsarmglühbehandlung unterworfenen Rohrwandbereiche oder Rohrwandsegmente während der Wärmebehandlung steuern und beeinflussen zu können, insbesondere aber die Temperatur nicht zu hoch werden zu lassen, zeichnet sich das erfindungsgemäße Verfahren zur Wärmebehandlung weiterhin dadurch aus, dass während der Spannungsarmglühbehandlung die Materialtemperatur und/oder die Ausdehnung der wärmezubehandelnden oder wärmebehandelten Rohrwandbereiche mittels eines Kühlmediums, vorzugsweise eines innenseitig in den Rohren des wärmebehandelten Rohrwandbereiches strömenden Kühlmediums, vorzugsweise mittels in die Rohre eingeleiteter Luft, gekühlt und vorzugsweise geregelt wird/werden.

Um zu verhindern, dass nicht wärmezubehandelnden Rohrwandbereiche (dabei) auf eine nicht gewünschte Temperatur erwärmt werden und um zu verhindern, dass (hierbei) die wärmezubehandelnden Rohrwandbereiche auf eine Temperatur erwärmt werden, die oberhalb des gewünschten Materialtemperaturbereiches liegt, können die zu der Wand, insbesondere Membranwand, zusammengebauten und miteinander verbundenen Rohrleitungen insgesamt in der Regel von unten nach oben in dem Dampferzeuger durch dampfseitig in die Rohre eingeleitete Luft gekühlt werden. Die Luft kann an einer gewünschten Stelle in die Rohrleitungen eingeleitet werden. Es kann auch vorgesehen werden, dass zusätzlich zur Kühlung die Luft gekühlt oder die Rohre von innen und/oder außen mit Wasser zur Kühlung besprüht werden. Durch diese Vorgehensweise, insbesondere aber die erfindungsgemäßen Verfahren, ist es möglich, insbesondere großflächig ganze Rohrwandbereiche oder Rohrwandsegmente im in den Dampferzeuger eingebauten Zustand wärmezubehandeln. Dies ist mit elektrischen Wärmebehandlungsmatten nicht möglich. Außerdem lässt sich durch diese Vorgehensweise und insbesondere die erfindungsgemäßen Verfahren die Temperatur derart regeln, dass beim elektrischen Beheizen oder Wärmebehandeln auftretende Verformungen ("Blasen") nicht auftreten und vermieden werden können. Hierzu kann insbesondere ergänzend vorgesehen sein, gegebenenfalls die wärmezubehandelnden Rohrwandbereiche oder Rohrwandsegmente auf ihre Wärmeausdehnung hin mit entsprechenden Detektoren zu beobachten.

Zur Erzielung der im vorhergehenden Absatz dargelegten Vorteile und zur Durchführung der damit verbundenen Vorgehens- oder Verfahrensweise zeichnet sich die Erfindung in Ausgestaltung weiterhin dadurch aus, dass nicht wärmezubehandelnde, insbesondere an wärmezubehandelnde Rohrwandbereiche angrenzende, Rohrwandbereiche während der Spannungsarmglühbehandlung gleichzeitig von außen und/oder innen mit einem Kühlmedium, vorzugsweise Luft, oder einem Wassersprühnebel, insbesondere auf eine Materialtemperatur unterhalb der Spannungsarmglühtemperatur, gekühlt werden.

Hierbei ist es dann weiterhin zweckmäßig, dass während der Spannungsarmglühbehandlung wärmezubehandelnde und nicht wärmezubehandelnde, an die wärmezubehandelnden Rohrwandbereiche angrenzende Rohrwandbereiche mittels des/eines durch die oder außenseitig längs der leitungsmäßig miteinander verbundenen wärmezubehandelnden und nicht wärmezubehandelnden Rohrwandbereiche strömenden Kühlmediums, vorzugsweise Kühlluft, gekühlt werden, was die Erfindung ebenfalls vorsieht.

Hierbei ist es gemäß weiterer Ausgestaltung des erfindungsgemäßen Verfahrens zur Wärmebehandlung von Vorteil, wenn während der Spannungsarmglühbehandlung sowohl die wärmezubehandelnden als auch an diese Rohrwandbereiche leitungsmäßig angeschlossene, nicht wärmezubehandelnde Rohrwandbereiche von außen oder von innen mit heißem Rauchgas oder Heißluft oder Heißgas beaufschlagt werden und dazu reziprok von innen oder von außen mittels eines durchströmenden Kühlmediums, vorzugsweise Kühlluft, gekühlt werden.

Ergänzend kann hierbei vorgesehen sein, dass während der Spannungsarmglühbehandlung Rohrwandkomponenten des Dampferzeugers von außen durch Besprühen und/oder von innen durch Eindüsen oder Einsprühen von Kühlwasser gekühlt werden.

Die erfindungsgemäßen Verfahren finden insbesondere bei kritischen Rohrwandkomponenten des Dampferzeugers Anwendung, wobei kritische Rohrwandkomponenten solche sind, die aufgrund ihres Materials und/oder der bei ihrer Herstellung und/oder ihrem Einbau in den Dampferzeuger erfolgenden Schweißbehandlung als besonders gefährdet angesehen werden, wenn diese nicht entsprechend wärmebehandelt werden.

Insbesondere findet das Verfahren zur Wärmebehandlung daher bei den Werkstoffen T23 oder 7CrMoWVMoNb 9-6 oder T24 oder 7CrMoVTiB 10-10 Anwendung. Die Erfindung zeichnet sich daher weiterhin dadurch aus, dass aus dem Werkstoff T23 oder 7CrMoWVMoNb 9-6 oder T24 oder 7CrMoVTiB 10-10 bestehende Rohrwandbereiche oder Rohrwandsegmente der/einer Spannungsarmglühbehandlung unterworfen werden.

Insbesondere findet das erfindungsgemäße Verfahren zur Wärmebehandlung an Überhitzern eines (Groß)Dampferzeugers Anwendung, weshalb sich die Erfindung weiterhin dadurch auszeichnet, dass die Rohrwandbereiche des Überhitzers des Dampferzeugers eines Kraftwerks der Spannungsarmglühbehandlung unterworfen werden.

Insbesondere lässt sich das erfindungsgemäße Verfahren zur Wärmebehandlung erfolgreich auch nach einer durchgeführten Reparaturschweißung an bereits errichteten Rohrwandbereichen oder Rohrwandsegmenten einer Dampferzeugerrohrwand anwenden. Die Erfindung zeichnet sich daher schließlich dadurch aus, dass die Spannungsarmglühbehandlung nach einer Reparaturbehandlung, insbesondere Reparaturschweißung, der wärmezubehandelnden Rohrwandbereiche durchgeführt wird.

Mit den in den Ansprüchen näher definierten Verfahren ist es möglich, insbesondere großflächig eine Spannungsarmglühbehandlung von Rohrwänden oder Rohrwandbereichen oder Rohrwandsegmenten eines errichteten Dampferzeugers in dem Temperaturbereich durchzuführen, der die vorhandenen Materialspannungen in einen spannungsarmen Bereich überführt, der ein unkritisches Niveau darstellt.

Hierbei kann es vorgesehen sein, dass die wärmezubehandelnden Rohrbereiche oder Rohrsegmente von der Feuerraumseite des Dampferzeugers her mit einer Temperatur beaufschlagt werden, die zu einer Spannungsarmglühbehandlung führt und ausreichend und notwendig für ein Spannungsarmglühen ist. In diesem Sinne werden die Rohrwandbereiche "von außen" oder "außenseitig" einer Spannungsarmglühbehandlung unterworfen. In diesem Falle wird entweder im Feuerraum oder Feuerungsraum des Dampferzeugers ein entsprechend heißes Rauchgas erzeugt oder wird in den Feuerraum ein Heizgas oder Heißgas oder Heißluft eingeleitet, welche(s) dann in diesem Sinne außenseitig an den wärmezubehandelnden Rohrwandbereichen oder Rohrsegmenten unter Wärmeübertragung auf die dem Feuerraum zugewandte Rohrwandseite oder Rohrwandfläche entlang strömt. In diesem Falle kann es dann möglich sein, die Rohre der Rohrwandbereiche innenseitig durch diese durchströmende Luft oder ein anderes Kühlmedium, wie beispielsweise Wasser, zu kühlen und damit einerseits die Ausdehnung insbesondere der wärmezubehandelnden Bereiche und andererseits die Temperatur, insbesondere der wärmezubehandelnden Bereiche einzustellen und zu kontrollieren.

In gleicher Weise liegt es aber auch im Rahmen der Erfindung und kann vorgesehen sein, dass die wärmezubehandelnden Rohrwandbereiche "von innen" oder "innenseitig" wärmebeaufschlagt werden. In diesem Fall wird in (die) Rohre der wärmezubehandelnden Rohrwandbereiche ein für die Erzeugung der für die Spannungsarmglühbehandlung notwendigen Temperatur des Rohrwandmaterials ausreichend heißes Rauchgas oder Heißgas oder Heißluft in die Rohre der wärmezubehandelnden Rohrwandbereiche oder Rohrsegmente eingeleitet. Dieses heiße Wärmeübertragungsmedium (heißes Rauchgas, Heißgas, Heizgas, Heißluft, etc.) strömt dann innenseitig durch (die) Rohre der wärmezubehandelnden Rohrwandbereiche und Rohrwandsegmente und überträgt die zur Erreichung der für die Spannungsarmglühbehandlung notwendige oder gewünschte Temperatur erforderliche Wärme auf die Rohrwandinnenfläche oder innenseitige Rohrwandfläche. In diesem Fall kann dann eine Kühlung "von außen" oder "außenseitig", also von der Feuerraumseite des Dampferzeugers her, vorgenommen werden, wobei die Kühlung die wärmezubehandelnden Rohrwandbereiche oder Rohrwandsegmente und/oder aber auch die nicht wärmezubehandelnden Rohrwandbereiche oder Rohrwandsegmente erfassen oder betreffen kann. Auch in diesem Falle lassen sich durch entsprechende außenseitige Kühlung und innenseitige Erwärmung oder Beheizung der jeweiligen Rohrwandbereiche einerseits die Ausdehnung insbesondere der wärmezubehandelnden Bereiche und andererseits die Temperatur insbesondere der wärmezubehandelnden Bereiche einstellen und kontrollieren.

Ergänzend sind natürlich zudem Temperaturmessungen an den einzelnen Rohrwandbereichen, insbesondere den wärmezubehandelnden Rohrwandbereichen, mit bekannten, insbesondere berührungslosen, Messmethoden möglich. Die Temperaturmessergebnisse können ebenfalls zur Steuerung und Regelung des Spannungsarmglühbehandlungsverfahrens genutzt werden.

Insbesondere bietet sich das erfindungsgemäße Verfahren zur Behandlung von Rohrwandbereichen oder Rohrwandsegmenten an, die aus den Stählen T23 oder T24 (Bezeichnung nach ASTM 213) oder den damit korrespondierenden Stählen 7CrMoWVMoNb 9-6 und 7CrMoVTiB 10-10 (Bezeichnung nach DIN EN 10216) hergestellt sind.

Auch wenn vorstehend oder nachstehend in den Ansprüchen lediglich vom "Rohrwandbereich" die Rede sein sollte, so betrifft dies auch immer "Rohrwandsegmente".

Insbesondere lässt sich das vorstehend beschriebene Verfahren zur Wärmebehandlung zweckmäßig bei einem Verfahren zur Errichtung von einen Feuerungsraum oder Feuerraum umgebenden Rohrwänden eines Dampferzeugers anwenden, bei welchem dann eine Glühbehandlung nach einem Verfahren gemäß einem oder mehreren der Ansprüche 1-15 durchgeführt wird.

Die bei dem erfindungsgemäßen Verfahren zur Erreichung der für eine Spannungsarmglühbehandlung notwendigen Temperatur bereitzustellende Wärmeenergie kann erfindungsgemäß durch Heißluft oder Heißgas bereitgestellt und an den Ort der Spannungsarmglühbehandlung transportiert werden. Hierbei kann die Heißluft oder das Heißgas nicht nur durch Verbrennung eines Brennstoffes unter Luftzufuhr oder Sauerstoffzufuhr, sondern auf jede technisch denkbare und mögliche Art und Weise erzeugt werden. Insbesondere ist es auch möglich, Heißluft oder ein Heißgas mit Hilfe elektrischer Energie zu erzeugen, wie dies beispielsweise in mit Heizvorrichtungen oder Heizdrähten vorgesehenen Gebläsen, Lüftern oder Trocknungslüftern der Fall ist. Auch eine rein mechanische Temperaturerhöhung eines Gases oder von Luft durch Komprimierung in einem entsprechenden Verdichter stellt eine Möglichkeit der Erzeugung eines Heißgases oder von Heißluft dar. Aber auch Wärmetauscher, in welchen Wärmeenergie von einem Wärmeträgermedium auf diesen Wärmetauscher durchströmende(s) oder an diesem Wärmetauscher vorbeiströmende(s) Luft oder Heizgas übertragen wird, können zur Erzeugung eines für die Durchführung einer Spannungsarmglühbehandlung ausreichend temperierten Heizgases oder Heißgases Verwendung finden.

## Patentansprüche

1. Verfahren zur Wärmebehandlung errichteter und großflächig ausgebildeter Rohrwandbereiche oder Rohrwandsegmente der Rohrwände eines Dampferzeugers eines fossil befeuerten Kraftwerks in ihrem im Feuerungsraum des Dampferzeugers angeordneten und eingebauten, zu den Dampferzeugerrohrwänden verschweißten Zustand, in welchem sie den Feuerungsraum des Dampferzeugers des fossil befeuerten Kraftwerks umgeben, wobei ganze wärmezubehandelnde Rohrwandbereiche oder Rohrwandsegmente in ihrem in den Dampferzeuger eingebauten und den Feuerungsraum umgebenden Zustand durch Erwärmen mittels eines heißen strömenden Wärmeübertragungsmediums großflächig einer großflächig wirkenden, jeweils große Bereiche der wärmezubehandelnden Rohrwandbereiche oder Rohrwandsegmente erfassenden oder beaufschlagenden Spannungsarmglühbehandlung unterworfen werden.

2. Verfahren nach Anspruch 1, **dadurch gekennzeichnet, dass** die für die Spannungsarmglühbehandlung gewünschte Materialtemperatur durch Beheizung oder Erwärmung der wärmezubehandelnden Rohrwandbereiche mittels eines erwärmten Heizgases oder Heißgases, vorzugsweise heißem Rauchgas oder Heißluft, erzeugt wird.

3. Verfahren nach Anspruch 1 oder 2, **dadurch gekennzeichnet, dass** zur Errichtung von einen Feuerungsraum eines Dampferzeugers eines Kraftwerks umgebenden Rohrwänden aus im Feuerungsraum anzuordnenden Rohrwandbereichen oder Rohrwandsegmenten die Rohrwandbereiche oder Rohrwandsegmente hergestellt, durch Verschweißung miteinander verbunden und in ihre den Feuerungsraum umgebende Einbauposition im Dampferzeuger gebracht sowie im Feuerungsraum zu den Rohrwänden verschweißt und der Spannungsarmglühbehandlung unterworfen werden.

4. Verfahren nach einem der Ansprüche 1 - 3, **dadurch gekennzeichnet, dass** innerhalb des Feuerraums des Dampferzeugers durch Verbrennung eines, insbesondere fossilen, Brennstoffs ein heißes Rauchgas oder Heißluft erzeugt wird oder dass ein heißes Rauchgas oder Heißluft oder ein Heißgas in den Feuerraum des Dampferzeugers und/oder die Rohre der wärmezubehandelnden Rohrwandbereiche eingeleitet wird, und dass das jeweilige heiße Rauchgas oder die jeweilige Heißluft oder das jeweilige Heißgas den wärmezubehandelnden Rohrwandbereichen außenseitig und/oder innenseitig zugeführt wird.

5. Verfahren nach einem der vorhergehenden Ansprüche, **dadurch gekennzeichnet, dass** während der Spannungsarmglühbehandlung eine Materialtemperatur der wärmezubehandelnden oder wärmebehandelten Rohrwandbereiche von 400 °C - 740 °C, vorzugsweise 400 °C - 600 °C, eingestellt wird oder dass während der Spannungsarmglühbehandlung eine Materialtemperatur der wärmezubehandelnden oder wärmebehandelten Rohrwandbereiche von ≥ 500 °C, vorzugsweise von 500 °C bis 600 °C, eingestellt wird.

6. Verfahren nach einem der Ansprüche 1 - 4, **dadurch gekennzeichnet, dass** während der Spannungsarmglühbehandlung eine Materialtemperatur der wärmezubehandelnden oder wärmebehandelten Rohrwandbereiche von ≥ 550 °C, vorzugsweise von 550 °C bis 700 °C, eingestellt wird oder dass während der Spannungsarmglühbehandlung eine Materialtemperatur der wärmezubehandelnden oder wärmebehandelten Rohrwandbereiche von ≤ 740 °C, oder vorzugsweise ≤ 600 °C, insbesondere von 740 °C bis 500 °C, besonders bevorzugt von 600 °C bis 550 °C, eingestellt wird.

7. Verfahren nach einem der vorhergehenden Ansprüche, **dadurch gekennzeichnet, dass** bei der Spannungsarmglühbehandlung eine Haltezeit der Materialtemperatur von ≥ 12 Stunden, insbesondere ≥ 24 Stunden, eingehalten wird.

8. Verfahren nach einem der vorhergehenden Ansprüche, **dadurch gekennzeichnet, dass** bei der Spannungsarmglühbehandlung eine Haltezeit der Materialtemperatur von weniger als einer Woche eingehalten wird.

9. Verfahren nach einem der vorhergehenden Ansprüche, **dadurch gekennzeichnet, dass** während der Spannungsarmglühbehandlung die Materialtemperatur und/oder die Ausdehnung der wärmezubehandelnden oder wärmebehandelten Rohrwandbereiche kontrolliert und/oder geregelt wird/werden und/oder dass die Spannungsarmglühbehandlung durch Messung der Ausdehnung und/oder der Materialtemperatur der jeweils wärmezubehandelnden Rohrwandbereiche oder Rohrwandsegmente sowie durch Einstellung und Einregelung der Feuerungsrate zur Erzeugung von Rauchgas oder Heißluft oder Heißgas, vorzugsweise im Feuerraum des Dampferzeugers, und/oder die Durchflussrate eines Kühlmediums eingestellt und geregelt wird.

10. Verfahren nach einem der vorhergehenden Ansprüche, **dadurch gekennzeichnet, dass** während der Spannungsarmglühbehandlung die Materialtemperatur und/oder die Ausdehnung der wärmezubehandelnden oder wärmebehandelten Rohrwandbereiche mittels eines Kühlmediums, vorzugsweise eines innenseitig in den Rohren des wärmebehandelten Rohrwandwandbereiches strömenden Kühlmediums, vorzugsweise mittels in die Rohre eingeleiteter Luft, gekühlt und vorzugsweise geregelt wird/werden.

11. Verfahren nach einem der vorhergehenden Ansprüche, **dadurch gekennzeichnet, dass** nicht wärmezubehandelnde, insbesondere an wärmezubehandelnde Rohrwandbereiche angrenzende, Rohrwandbereiche während der Spannungsarmglühbehandlung gleichzeitig von außen und innen mit einem Kühlmedium, vorzugsweise Luft oder ein Wassersprühnebel, insbesondere auf eine Materialtemperatur unterhalb der Spannungsarmglühtemperatur, gekühlt werden und/oder dass während der Spannungsarmglühbehandlung wärmezubehandelnde und nicht wärmezubehandelnde, an die wärmezubehandelnden Rohrwandbereiche angrenzende Rohrwandbereiche mittels des/eines durch die oder außenseitig längs der leitungsmäßig miteinander verbundenen wärmezubehandelnden und nicht wärmezubehandelnden Rohrwandbereiche strömenden Kühlmediums, vorzugsweise Kühlluft, gekühlt werden.

12. Verfahren nach einem der vorhergehenden Ansprüche, **dadurch gekennzeichnet, dass** während der Spannungsarmglühbehandlung sowohl die wärmezubehandelnden als auch an diese Rohrwandbereiche leitungsmäßig angeschlossene, nicht wärmezubehandelnde Rohrwandbereiche von außen oder von innen mit heißem Rauchgas oder Heißluft oder Heißgas beaufschlagt werden und dazu reziprok von innen oder von außen mittels eines durchströmenden Kühlmediums, vorzugsweise Kühlluft, gekühlt werden.

13. Verfahren nach einem der vorhergehenden Ansprüche, **dadurch gekennzeichnet, dass** aus dem Werkstoff T23 oder 7CrMoWVMoNb 9-6 oder T24 oder 7CrMoVTiB 10-10 bestehende Rohrwandbereiche der Spannungsarmglühbehandlung unterworfen werden.

14. Verfahren nach einem der vorhergehenden Ansprüche, **dadurch gekennzeichnet, dass** die Rohrwandbereiche des Überhitzers des Dampferzeugers eines Kraftwerks der Spannungsarmglühbehandlung unterworfen werden.

15. Verfahren nach einem der vorhergehenden Ansprüche, **dadurch gekennzeichnet, dass** die Spannungsarmglühbehandlung nach einer Reparaturbehandlung, insbesondere Reparaturschweißung, der wärmezubehandelnden Rohrwandbereiche durchgeführt wird.

## Claims

1. Method for the heat treatment of erected and large-area tube wall regions or tube wall segments of the tube walls of a steam generator of a fossil-fired power plant in their state arranged and installed in the combustion chamber of the steam generator and welded to form the steam generator tube walls, in which they surround the combustion chamber of the steam generator of the fossil-fired power plant, wherein entire tube wall regions or tube wall segments for heat treatment, in their state installed in the steam generator and surrounding the combustion chamber, are subjected, by heating by means of a hot flowing heat transfer medium, over a large area to a stress-relief annealing treatment which acts over a large area and covers or acts on in each case large areas of the tube wall regions or tube wall segments for heat treatment.

2. Method according to claim 1, **characterized in that** the material temperature desired for the stress-relief annealing treatment is generated by heating or warming the tube wall regions for heat treatment by means of a warmed heating gas or hot gas, preferably hot flue gas or hot air.

3. Method according to claim 1 or 2, **characterized in that**, for erecting tube walls surrounding a combustion chamber of a steam generator of a power plant from tube wall regions or tube wall segments to be arranged in the combustion chamber, the tube wall regions or tube wall segments are manufactured, are connected to one another by welding and are placed into their installation position, in which they surround the combustion chamber, in the steam generator, and are welded in the combustion chamber to form the tube walls and subjected to the stress-relief annealing treatment.

4. Method according to any one of claims 1 to 3, **characterized in that**, within the combustion chamber of the steam generator, a hot flue gas or hot air is generated through the combustion of an in particular fossil fuel, or **in that** a hot flue gas or hot air or a hot gas is introduced into the combustion chamber of the steam generator and/or the tubes of the tube wall regions for heat treatment, and **in that** the respective hot flue gas or the respective hot air or the respective hot gas is supplied at the outside and/or at the inside to the tube wall regions for heat treatment.

5. Method according to any one of the preceding claims, **characterized in that**, during the stress-relief annealing treatment, a material temperature of the tube wall regions for heat treatment or heat-treated tube wall regions of 400°C - 740°C, preferably 400°C - 600°C, is set, or **in that**, during the stress-relief annealing treatment, a material temperature of the tube wall regions for heat treatment or heat-treated tube wall regions of ≥ 500°C, preferably of 500°C to 600°C, is set.

6. Method according to any one of claims 1 to 4, **characterized in that**, during the stress-relief annealing treatment, a material temperature of the tube wall regions for heat treatment or heat-treated tube wall regions of ≥ 550°C, preferably of 550°C to 700°C, is set, or **in that**, during the stress-relief annealing treatment, a material temperature of the tube wall regions for heat treatment or the heat-treated tube wall regions of ≤ 740°C, or preferably ≤ 600°C, particularly of 740°C to 500°C, particularly preferably of 600°C to 550°C, is set.

7. Method according to any one of the preceding claims, **characterized in that**, during the stress-relief annealing treatment, a holding time of the material temperature of ≥ 12 hours, in particular ≥ 24 hours, is met.

8. Method according to any one of the preceding claims, **characterized in that**, during the stress-relief annealing treatment, a holding time of the material temperature of less than one week is met.

9. Method according to any one of the preceding claims, **characterized in that**, during the stress-relief annealing treatment, the material temperature and/or the expansion of the tube wall regions for heat treatment or heat-treated tube wall regions is/are controlled and/or regulated, and/or **in that** the stress-relief annealing treatment is adjusted and regulated by means of the measurement of the expansion and/or the material temperature of the tube wall regions or tube wall segments for heat treatment in each case and by means of the adjustment and regulation of the combustion rate for generating flue gas or hot air or hot gas, preferably in the combustion chamber of the steam generator, and/or the throughflow rate of a cooling medium is adjusted and regulated.

10. Method according to any one of the preceding claims, **characterized in that**, during the stress-relief annealing treatment, the material temperature and/or the expansion of the tube wall regions for heat treatment or heat-treated tube wall regions is/are cooled and preferably regulated by means of a cooling medium, preferably a cooling medium flowing inside the tubes of the heat-treated tube wall region, preferably by means of air conducted into the tubes.

11. Method according to any one of the preceding claims, **characterized in that**, during the stress-relief annealing treatment, tube wall regions not for heat treatment, in particular adjoining tube wall regions for heat treatment, are cooled simultaneously from the outside and/or inside by means of a cooling medium, preferably air or atomized water spray, in particular to a material temperature below the stress-relief annealing temperature, and/or **in that**, during the stress-relief annealing treatment, tube wall regions for heat treatment and tube wall regions not for heat treatment adjoining the tube wall regions for heat treatment are cooled by means of the/a cooling medium, preferably cooling air, flowing through or along the outside of the conductively interconnected tube wall regions for heat treatment and tube wall regions not for heat treatment.

12. Method according to any one of the preceding claims, **characterized in that**, during the stress-relief annealing treatment, both the tube wall regions for heat treatment and also, conductively connected thereto, tube wall regions not for heat treatment are impinged on from the outside or from the inside by hot flue gas or hot air or hot gas and, for this purpose, are cooled reciprocally from the inside or from the outside by means of a cooling medium flowing through, preferably cooling air.

13. Method according to any one of the preceding claims, **characterized in that** tube wall regions composed of the material T23 or 7CrMoWVMoNb 9-6 or T24 or 7CrMoVTiB 10-10 are subjected to the stress-relief annealing treatment.

14. Method according to any one of the preceding claims, **characterized in that** the tube wall regions of the superheater of the steam generator of a power plant are subjected to the stress-relief annealing treatment.

15. Method according to any one of the preceding claims, **characterized in that** the stress-relief annealing treatment is performed following a repair treatment, in particular repair welding of the tube wall regions for heat treatment.

## Revendications

1. Procédé de traitement thermique de parties de parois tubulaires ou de segments de parois tubulaires, érigés et réalisés sur de grandes surfaces, des parois tubulaires d'un générateur de vapeur d'une centrale alimentée en carburant fossile dans leur état disposé et inséré dans la chambre de combustion du générateur de vapeur, soudé aux parois tubulaires du générateur de vapeur, dans lequel elles entourent la chambre de combustion du générateur de vapeur de la centrale à carburant fossile, toutes les parties de parois tubulaires ou tous les segments de parois tubulaires à traiter thermiquement dans leur état inséré dans le générateur de vapeur et entourant la chambre de combustion étant soumis, grâce au chauffage au moyen d'un fluide de transmission thermique s'écoulant à haute température, à un traitement de recuit de détensionnement, sur une grande surface ou agissant sur une grande surface, concernant ou sollicitant de grandes zones des parties de parois tubulaires ou segments de parois tubulaires à traiter thermiquement.

2. Procédé selon la revendication 1, **caractérisé en ce que** la température de matériau souhaitée pour le traitement de recuit de détensionnement est atteinte par un chauffage des parties de parois tubulaires à traiter thermiquement au moyen d'un gaz de chauffage ou d'un gaz chaud chauffé, de préférence un gaz de combustion chaud ou de l'air chaud.

3. Procédé selon la revendication 1 ou 2, **caractérisé en ce que**, pour l'érection de parois tubulaires entourant une chambre de combustion d'un générateur de vapeur d'une centrale, constituées de parties de parois tubulaires ou de segments de parois tubulaires à disposer dans la chambre de combustion, les parties de parois tubulaires ou segments de parois tubulaires sont reliés entre eux par soudure et amenés dans leur position d'insertion entourant la chambre de combustion dans le générateur de vapeur et soudés, dans la chambre de combustion, aux parois tubulaires et soumis au traitement de recuit de détensionnement.

4. Procédé selon l'une des revendications 1 à 3, **caractérisé en ce que**, à l'intérieur de la chambre de combustion du générateur de vapeur, par la combustion d'un carburant, plus particulièrement un carburant fossile, un gaz de combustion chaud ou de l'air chaud est généré, ou **en ce qu'**un gaz de combustion chaud ou de l'air chaud ou un gaz chaud est introduit dans la chambre de combustion du générateur de vapeur et/ou dans les tubes des parties de parois tubulaires à traiter thermiquement, et **en ce que** le gaz de combustion chaud ou l'air chaud ou le gaz chaud correspondant est amené côté extérieur et/ou côté intérieur vers les parties de parois tubulaires à traiter thermiquement.

5. Procédé selon l'une des revendications précédentes, **caractérisé en ce que**, pendant le traitement de recuit de détensionnement, une température de matériau des parties de parois tubulaires à traiter thermiquement ou traitées thermiquement de 400 °C à 740 °C, de préférence de 400 °C à 600 °C, est réglée ou **en ce que**, pendant le traitement de recuit de détensionnement, une température de matériau des parties de parois tubulaires à traiter thermiquement ou traitées thermiquement ≥ 500 °C, de préférence de 500 °C à 600 °C, est réglée.

6. Procédé selon l'une des revendications 1 à 4, **caractérisé en ce que**, pendant le traitement de recuit de détensionnement, une température de matériau des parties de parois tubulaires à traiter thermiquement ou traitées thermiquement ≥ 550 °C, de préférence de 550 °C à 700 °C, est réglée ou **en ce que**, pendant le traitement de recuit de détensionnement, une température de matériau des parties de parois tubulaires à traiter thermiquement ou traitées thermiquement ≤ 740 °C ou de préférence ≤ 600 °C, plus particulièrement de 740 °C à 500 °C, plus préférentiellement de 600 °C à 550 °C, est réglée.

7. Procédé selon l'une des revendications précédentes, **caractérisé en ce que**, lors du traitement de recuit de détensionnement, un temps de maintien de la température du matériau ≥ 12 heures, plus particulièrement ≥ 24 heures, est respecté.

8. Procédé selon l'une des revendications précédentes, **caractérisé en ce que**, lors du traitement de recuit de détensionnement, un temps de maintien de la température du matériau inférieur à une semaine est respecté.

9. Procédé selon l'une des revendications précédentes, **caractérisé en ce que**, pendant le traitement de recuit de détensionnement, la température du matériau et/ou la dilatation des parties de parois tubulaires à traiter thermiquement ou traitées thermiquement est contrôlée et/ou régulée et/ou **en ce que** le traitement de recuit de détensionnement est réglé et régulé par la mesure de la dilatation et/ou de la température du matériau des parties de parois tubulaires ou segments de parois tubulaires à traiter thermiquement ainsi que par le réglage et la régulation du taux de combustion pour la production de gaz de combustion ou d'air chaud ou de gaz chaud, de préférence dans la chambre de combustion du générateur de vapeur, et/ou du débit d'un fluide de refroidissement.

10. Procédé selon l'une des revendications précédentes, **caractérisé en ce que**, pendant le traitement de recuit de détensionnement, la température du matériau et/ou la dilatation des parties de parois tubulaires à traiter thermiquement ou traitées thermiquement est refroidie et de préférence régulée au moyen d'un fluide de refroidissement, de préférence d'un fluide de refroidissement s'écoulant côté intérieur dans les tubes de la partie de paroi tubulaire traitée thermiquement, de préférence au moyen d'air introduit dans les tubes.

11. Procédé selon l'une des revendications précédentes, **caractérisé en ce que** les parties de parois tubulaires qui ne doivent pas être traitées thermiquement, plus particulièrement les parties de parois tubulaires qui ne doivent pas être traitées thermiquement adjacentes aux parties de parois tubulaires à traiter thermiquement, pendant le traitement de recuit de détensionnement, sont refroidies simultanément de l'extérieur et de l'intérieur, avec un fluide de refroidissement, de préférence de l'air ou un brouillard de pulvérisation d'eau, plus particulièrement à une température de matériau inférieure à la température de recuit de détensionnement et/ou **en ce que**, pendant le traitement de recuit de détensionnement, les parties de parois tubulaires à traiter thermiquement et les parties de parois tubulaires qui ne doivent pas être traitées thermiquement, adjacentes aux parties de parois tubulaires à traiter thermiquement, sont refroidies au moyen du ou d'un fluide de refroidissement, plus particulièrement de l'air de refroidissement, s'écoulant à travers ou à l'extérieur le long des parties de parois tubulaires à traiter thermiquement et des parties de parois tubulaires qui ne doivent pas être traitées thermiquement, reliées entre elles par des conduites.

12. Procédé selon l'une des revendications précédentes, **caractérisé en ce que**, pendant le traitement de recuit de détensionnement, les parties de parois tubulaires à traiter thermiquement ainsi que les parties de parois tubulaires qui ne doivent pas être traitées thermiquement, raccordées auxdites parties de parois tubulaires à traiter thermiquement par des conduites, sont alimentées de l'extérieur ou de l'intérieur avec un gaz de combustion chaud ou de l'air chaud ou un gaz chaud et refroidies de manière réciproque de l'intérieur ou de l'extérieur au moyen d'un fluide de refroidissement circulant à travers celles-ci, de préférence de l'air de refroidissement.

13. Procédé selon l'une des revendications précédentes, **caractérisé en ce que** les parties de parois tubulaires constituées du matériau T23 ou 7CrMoWVMoNb 9-6 ou T24 ou 7CrMoVTiB 10-10 sont soumises au traitement de recuit de détensionnement.

14. Procédé selon l'une des revendications précédentes, **caractérisé en ce que** les parties de parois tubulaires du surchauffeur du générateur de vapeur d'une centrale sont soumises au traitement de recuit de détensionnement.

15. Procédé selon l'une des revendications précédentes, **caractérisé en ce que** le traitement de recuit de détensionnement est effectué après un traitement de réparation, plus particulièrement une soudure de réparation, des parties de parois tubulaires à traiter thermiquement.
